# DEMANDE DE BREVET EUROPEEN

(11) **EP 1 432 253 A1**
(43) Date de publication de la demande: **23.06.2004**
(21) Numéro de dépôt: 04101081.0
(22) Date de dépôt: 15.06.1994
(51) Int. Cl.: H04Q 1/02, H04M 1/02

(54) **Dispositif terminal d'interconnexion téléphonique d'abonné**

(30) Priorité: 07.07.1993 FR 9308584
(62) Demande divisionnaire de: 94420174.8
(71) Demandeur: POUYET INTERNATIONAL, F-94200 Ivry-sur-Seine (FR)
(72) Inventeur: Bonvallat, Pierre, 74300 Cluses (FR); Fasce, Xavier, 74300 Cluses (FR)
(74) Mandataire: Palix, Stéphane

(57) **Abrégé**

Un dispositif terminal d'interconnexion téléphonique d'une ou plusieurs lignes téléphoniques privées (20, 21) d'au moins un abonné à une ou plusieurs lignes correspondantes (14, 15) d'un distributeur, se présente sous la forme d'un boîtier (1) divisé en deux compartiments, un premier compartiment (5) généralement non accessible à l'abonné et contenant la connectique du distributeur, et un second compartiment (4) accessible à l'abonné et contenant la connectique de l'abonné, et comprenant, pour chaque ligne (14, 20 ; 15, 21), une prise de test branchée directement sur la ligne du distributeur (14, 15) et servant à tester le bon fonctionnement de la ou des lignes du distributeur.

Les interconnexions électriques entre le premier compartiment (5) et le second compartiment (4) sont réalisées par des moyens de liaison non-filaires (29, 30, 97, 102).

## Description

La présente invention se rapporte à un dispositif terminal d'interconnexion téléphonique d'abonné.

Un tel dispositif est normalement réalisé sous forme d'un boîtier qui peut être disposé à l'extérieur, et donc soumis aux intempéries. Il a pour but de raccorder la ligne téléphonique à un ou plusieurs abonnés.

Il existe actuellement, en particulier aux États-Unis d'Amérique, des boîtiers de ce type, dénommés « Network Interface Devices », qui sont déjà particulièrement bien étudiés en ce sens qu'ils comportent, dans un seul et même boîtier, deux compartiments nettement séparés :
- un premier compartiment qui est directement accessible lorsque l'on ouvre le couvercle du boîtier, et qui contient la connectique propre à l'installation de l'abonné, ou des abonnés s'il y a plus d'une ligne téléphonique d'abonné reliée par ce boîtier ;
- un second compartiment qui n'est alors accessible que si l'on ouvre un second couvercle, généralement fermé par plombage, et qui contient la connectique propre à l'opérateur, c'est-à-dire à l'Administration publique ou privée chargée de la distribution téléphonique.

Du côté de la connectique propre à l'abonné, ou aux abonnés, ces dispositifs modernes utilisent généralement en outre une prise de test, généralement de type « modular jack » qui est placée en amont des deux bornes de raccordement au boîtier de la ligne de l'installation de l'abonné, et électriquement en série avec celles-ci.

Cette prise de test se compose d'une part d'une embase femelle « modular jack » qui est branchée directement sur la ligne d'arrivée, en sortie du compartiment réservé à ladite Administration, et d'autre part d'une prise ou fiche mâle complémentaire, également de type « modular jack », qui est prévue à l'extrémité d'une portion de câble à deux conducteurs, dont l'autre extrémité est connectée aux deux bornes précitées de raccordement au boîtier interface des deux fils de la ligne de l'installation privée de l'abonné. Si l'on introduit cette prise mâle dans cette embase femelle, la continuité de connexion est assurée, et cette installation privée est alimentée. Elle ne l'est plus si l'on retire alors cette prise mâle, mais en revanche l'abonné peut alors, pour tester le bon fonctionnement de l'installation propre à ladite Administration en cas de panne, brancher directement son terminal ou poste téléphonique (qui est lui-aussi équipé d'une fiche « modular jack ») sur cette embase femelle. Si son poste téléphonique fonctionne alors normalement, c'est que la panne ne provient pas de l'installation propre à l'Administration, mais de son installation privée.

Dans ce genre de boîtier d'interconnexion, toutes les liaisons sont des liaisons filaires qui ont pour inconvénients d'être longues et peu pratiques à installer, ainsi que d'être sujettes à la corrosion.

Par ailleurs, du fait que tous les raccordements s'effectuent par vissages sur des extrémités dénudées de fils de liaison, il est aisé pour un fraudeur de se brancher, en utilisant ces vis de connexion, sur la ligne d'un abonné sans que ce dernier ne s'en aperçoive. Il est aussi possible de frauder de la même façon en utilisant une adaptation à sorties multiples pour prise « Modular Jack ».

L'invention vise à remédier à ces inconvénients des dispositifs connus et décrits ci-dessus, tout en en présentant néanmoins tous les avantages. Elle se rapporte à cet effet à un dispositif terminal d'interconnexion téléphonique d'au moins un abonné, qui se présente sous la forme d'un boîtier divisé en deux compartiments nettement distincts, dont un premier compartiment qui contient la connectique propre à l'Administration ou Entreprise chargée de la distribution téléphonique et qui n'est généralement pas accessible à l'abonné, et un second compartiment qui est accessible à celui-ci et qui contient donc la connectique propre à sa ou à ses lignes téléphoniques privées qui se raccordent à la ou aux lignes correspondantes de ladite Administration ou Entreprise par l'intermédiaire de ce dispositif terminal d'interconnexion, ce second compartiment contenant, pour chaque ligne, une prise de test composée d'une prise téléphonique branchée directement sur la ligne de ladite Administration ou Entreprise et en sortie dudit premier compartiment réservé à cette dernière, cette prise étant apte à recevoir, pour tester le bon fonctionnement de l'installation propre à cette Administration ou Entreprise, la fiche conjuguée qui équipe normalement un terminal ou poste téléphonique de l'abonné, et ce dispositif étant caractérisé :
- en ce que, dans ce boîtier, les interconnexions électriques ne sont pas réalisées par des liaisons filaires, mais par des moyens de liaison non-filaires tels que des lames métalliques ou des circuits métalliques découpés,
- et en ce que, dans ledit second compartiment de ce boîtier, ladite prise téléphonique est associée à des moyens électromécaniques qui, lorsqu'on vient tout naturellement brancher dans cette prise ladite fiche conjuguée d'un terminal ou poste téléphonique, entraînent alors la coupure automatique de la liaison électrique qui existait entre cette prise et la ligne correspondante privée de l'abonné.

L'invention sera bien comprise, et ses avantages et autres caractéristiques ressortiront, lors de la description suivante de quelques exemples non limitatifs de réalisation de ce dispositif terminal d'interconnexion téléphonique pour un ou plusieurs abonnés, en référence au dessin schématique annexé dans lequel :
- Figure 1 est une vue perspective éclatée partielle d'une première forme de réalisation de ce boîtier terminal d'interconnexion téléphonique d'abonné.
- Figure 2 est une vue perspective éclatée d'un des deux modules spécifiques d'abonné qui équipent le terminal d'interconnexion de la Figure 1.
- Figure 3 est une coupe longitudinale partielle du terminal d'interconnexion de la Figure 1, avec son volet de fermeture de sa prise de test fermé.
- Figure 4 est une vue semblable à Figure 3, avec ce même volet ouvert.
- Figure 5 est une vue en coupe d'un des deux modules R-C enfichables qui équipent ce même boîtier d'interconnexion.
- Figure 6 est une coupe transversale de ce boîtier d'interconnexion selon VI - VI de Figure 3.
- Figure 7 est une vue de dessus de ce même boîtier d'interconnexion, avec ses deux couvercles ouverts et les fils de lignes d'arrivée et de départ branchés.
- Figure 8 est une vue d'ensemble, en perspective, d'une seconde forme de réalisation de ce boîtier terminal d'interconnexion téléphonique d'abonné, avec le couvercle « côté abonné » seul enlevé.
- Figure 9 montre, de même façon, ce boîtier selon Figure 8, avec les deux couvercles enlevés et son module enfichable de protection contre les surtensions ainsi que son module R-C non encore enfichés.
- Figure 10 est une perspective éclatée du boîtier terminal d'interconnexion selon ces Figures 8 et 9.
- Figure 11 est une vue de détail du terminal d'interconnexion de ces figures 8 à 10, faisant comprendre comment l'insertion d'une prise téléphonique dans son conjoncteur entraîne la déconnexion de la ligne côté abonné.
- Figure 12 est une vue de dessus, semblable à Figure 7, d'une troisième forme de réalisation de ce boîtier d'interconnexion, avec son couvercle principal seul ouvert.
- Figure 13 montre, de même façon, ce boîtier selon Figure 12 avec ce même couvercle principal fermé.
- Figure 14 en est une coupe transversale partielle selon XIV - XIV de Figure 13.
- Figure 15 est une vue semblable à Figure 12, montrant ce même boîtier avec ses deux couvercles, « principal » et « côté distribution téléphonique », tous deux ouverts.
- Figure 16 est une vue perspective éclatée d'une variante, plus universelle, de réalisation du boîtier terminal de la Figure 10.
- Figure 17 montre le boîtier terminal de la Figure 16, mais prêt à être équipé d'un module d'abonné à prise « modular jack » et non pas d'un module d'abonné à conjoncteur français.
- Figures 18 et 19 sont respectivement une vue en coupe et une vue en plan par le dessous de la platine-support, montrant très schématiquement comment s'effectue la connexion du conjoncteur enfichable équipant le boîtier selon Figure 16.
- Figures 20 et 21 sont des vues similaires à Figures 18 et 19, mais relatives à la prise modular-jack enfichable équipant le boîtier selon Figure 17.
- Figure 22 est une vue semblable à Figure 15, et illustrant une dernière variante de réalisation de ce terminal d'interconnexion ; sur cette figure, les connexions filaires selon Figure 15 ne sont pas représentées.
- Figure 23 est une vue partielle en perspective du terminal d'interconnexion selon Figure 22.
- Figure 24 est une vue semblable à Figure 23, avec la boite d'interconnexion vidée de ses deux modules enfichables, un de ces modules étant figuré au-dessus de cette boite.
- Figures 25 et 26 sont des vues en perspective du module enfichable selon Figure 24, le volet coulissant qui recouvre sa prise de test femelle, ici de type « modular jack », étant respectivement en position de fermeture (Figure 25) et en position d'ouverture (Figure 26).
- Figure 27 est une vue semblable à Figure 24, avec ledit module enfichable mis en place dans ladite boite.
- Figure 28 est une vue perspective partielle qui montre l'interface selon Figure 27, avec le premier couvercle, relatif au côté distributeur, seul refermé, seule la partie côté abonné restant visible et donc accessible.
- Figure 29 est une vue en plan du terminal d'interconnexion selon Figure 27, avec les liaisons filaires, d'arrivée et de départ, réalisées.

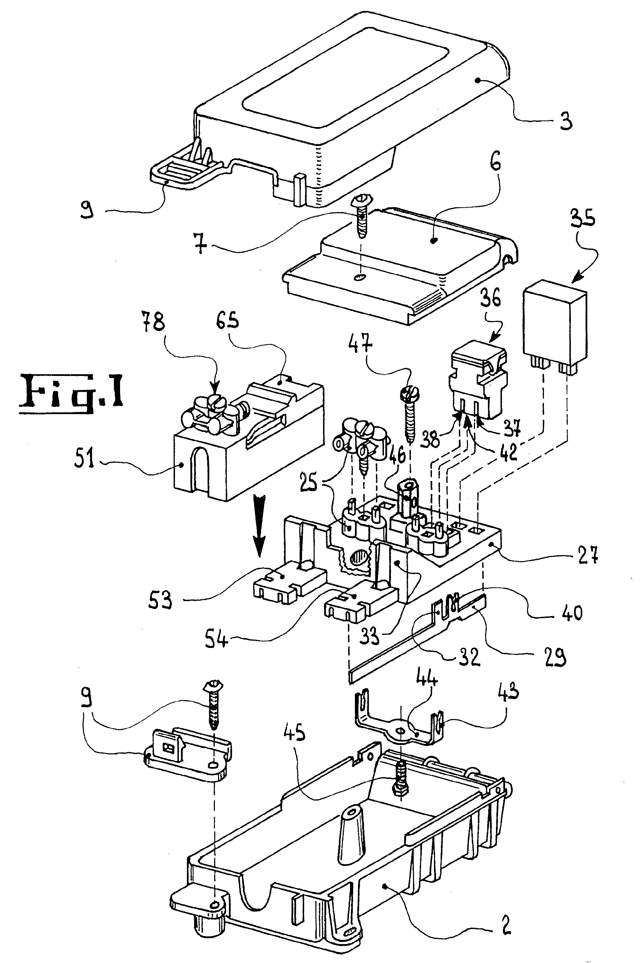

En se référant tout d'abord à l'ensemble des Figures 1 à 7, il s'agit, dans une première forme de réalisation, d'un dispositif terminal d'interconnexion téléphonique qui, dans cet exemple, peut assurer l'interconnexion de deux lignes d'abonné sur deux lignes correspondantes du réseau téléphonique général.

Un terminal d'interconnexion de ce type se présente, d'une manière très générale, sous la forme d'un boîtier 1 en matière plastique qui est destiné à être mis en place sur un mur, soit l'intérieur soit à l'extérieur d'un immeuble ou maison d'habitation ou de bureaux ou autres locaux d'activités.

Il est ici réalisé en deux demi-coques, dont une demi-coque de fond 2 et un couvercle principal conjugué 3 qui se referme sur ce fond 2 de manière pratiquement étanche aux intempéries.

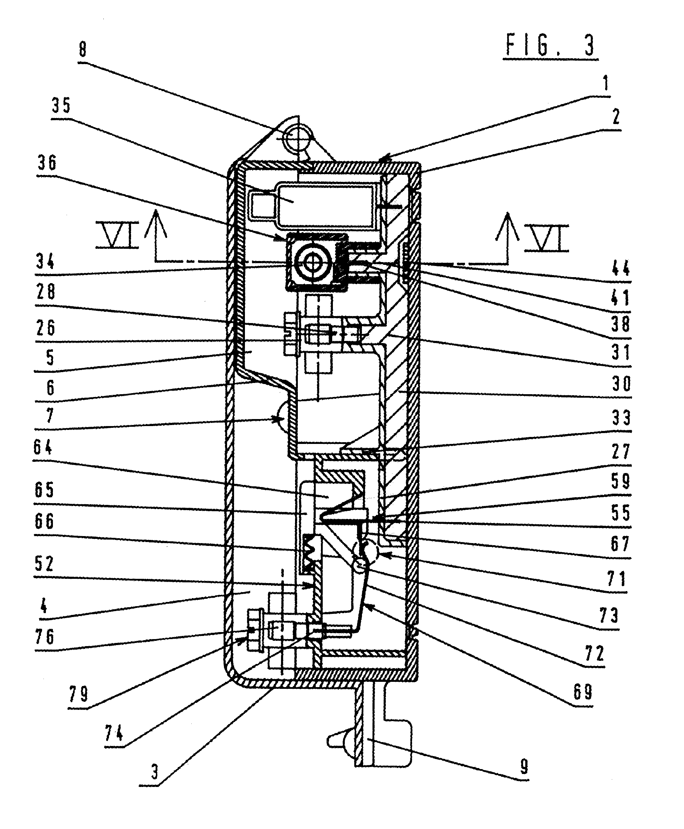

La partie interne du boîtier 1 est divisée, ce qui en soi n'est pas nouveau, en deux compartiments bien distincts, dont (voir par exemple les Figures 3 et 7) un premier compartiment 4 qui est directement accessible lorsque l'on ouvre le couvercle principal 3 et qui contient toute la connectique d'interconnexion qui est propre aux deux abonnés, et un deuxième compartiment 5 qui n'est accessible que lorsqu'on ouvre un couvercle secondaire 6, à vis de fermeture 7 généralement plombée, et qui contient toute la connectique de connexion qui est propre à l'Administration ou Entreprise chargée de la distribution téléphonique, et qui sera appelée ici « Distributeur » par opposition aux usagers, ou « Abonnés ».

Dans cette forme de réalisation, le couvercle principal 3 et le couvercle secondaire 6 sont montés rotatifs sur un axe commun 8. Le premier se ferme par une fermeture à encliquetage 9, et le second par la vis plombable précitée 7. D'autres formes de réalisation de ces couvercles existent, comme on le verra par la suite, tout ceci étant en soi bien classique contrairement à ce qui va suivre maintenant.

Conformément à un premier aspect de l'invention, ce terminal d'interconnexion ne comporte aucune liaison filaire interne, les seuls fils qu'il contient étant (Figure 7) d'une part les quatre fils d'extrémité 10, 11 et 12, 13 des deux lignes d'arrivée respectives 14 et 15, et d'autre part les quatre fils d'extrémité 16, 17 et 18, 19 des deux lignes de départ respectives 20 et 21 vers les deux abonnés, ainsi que par ailleurs les deux fils de masse respectifs 22 et 23, tous ces fils étant introduits dans la boite à travers un passe-cloison caoutchouc 24.

Dans le compartiment 5, les deux lignes d'arrivée 14 et 15, qui proviennent donc du distributeur, sont connectées comme représenté à un module respectif 25 et 26 d'interconnexion rapide de lignes téléphoniques à vis de commande et fentes de connexion autodénudantes. Chacun de ces modules est un module, d'un type maintenant largement répandu et vendu par la Société Demanderesse sous la référence « MX », qui est pratiquement identique à celui décrit dans le brevet US n° 4.767.354 et en particulier représenté, sous la référence 1, aux Figures 1, 2, 4 et 6 de ce brevet US. Cependant, il vient se visser dans un socle 27 en matière plastique qui sert de support à tous les éléments placés dans le boîtier 1, et qui est rendu solidaire du fond 2. En outre, il ne comporte pas d'orifices d'introduction, dans un but de raccordement par la partie inférieure fendue de chacun de ses deux contacts métalliques tubulaires 28 à fentes autodénudantes supérieures et inférieures, d'une seconde paire de fils. En revanche, cette partie inférieure fendue du contact tubulaire 28 est solidement enfichée sur la tranche d'une lame métallique longitudinale respective 30, 29 (Figures 3 et 1) qui est emprisonnée dans le corps du socle 27 et qui comprend dans ce but une petite partie proéminente conjuguée 31, 32.

A noter que les deux contacts 28 peuvent ne pas être des contacts tubulaires, mais des contacts plats à fente autodénudante supérieure ainsi que, préférentiellement, à fente autodénudante inférieure qui vient alors s'enficher sur la tranche de la lame métallique longitudinale correspondante 29 ou 30.

Les deux lames métalliques longitudinales 29 et 30 sont parallèles et chacune situées dans un plan vertical longitudinal. Elles forment en quelque sorte un « bus » métallique qui assure l'interconnexion électrique en parallèle de tous les éléments du boîtier 1 qui concernent une même ligne téléphonique. Dans le cas présent, il y a deux lignes téléphoniques, et donc deux paires respectives de lames 29, 30 et 57, 58 et par suite deux « bus ».

La paroi isolante 33 qui définit la séparation entre les deux compartiments 4 et 5 est une partie intégrante du socle 27.

Sur le bus d'interconnexion 29, 30 sont, dans le compartiment 5 propre au distributeur, également enfichés un module 36 de protection contre les surtensions et un module 35 destiné aux tests de ligne à distance, dit « module R-C ».

Le module de protection 36, qui contient un parasurtension tripolaire 34, est un module de protection enfichable bien classique, et plus précisément un module tel que décrit dans la demande de Brevet en France n° 93/ 05.049 et commercialisé par la Demanderesse sous la référence « MXP ».

Ses deux fiches de ligne 37, 38 viennent s'encastrer dans deux contacts « lyre » conjugués 40, 41 qui sont eux-aussi formés par une proéminence respective de la lame réceptrice respective 29 et 30. Sa fiche médiane de masse 42 vient s'encastrer dans un contact lyre conjugué 43 qui est formé (Figure 1) par une des deux extrémités, relevées à la verticale, d'une lame métallique de masse, transversale et comprise dans le plan horizontal, 44.

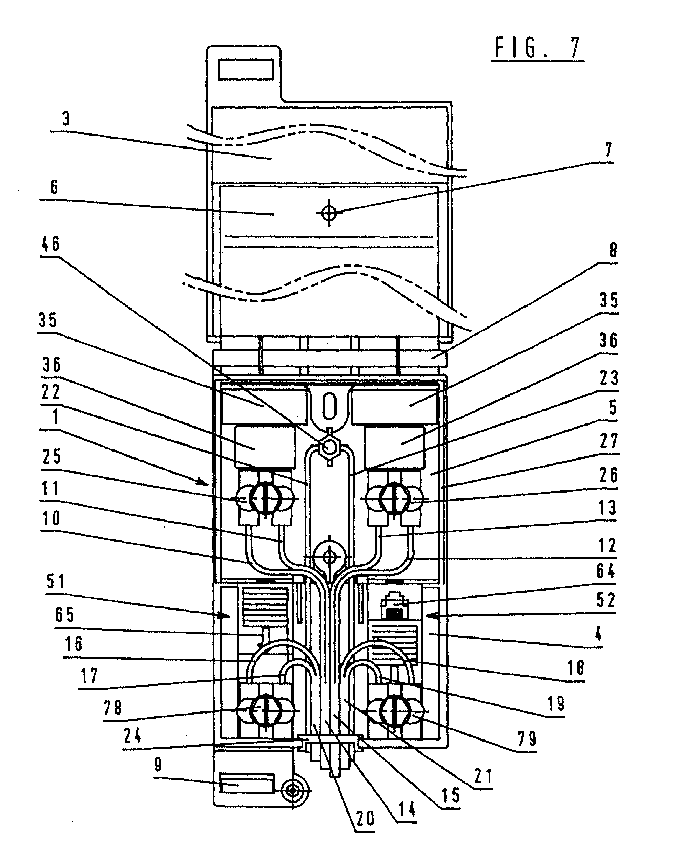

La lame transversale 44 est fixée sous le socle 27 par une vis métallique médiane 45 dont l'extrémité pénètre dans un contact métallique médian 46 qui reçoit les fils de masse précités 22 et 23. Les extrémités dénudées de ces deux fils de masse sont serrées dans le contact 46 au moyen d'une vis 47 (voir en particulier la Figure 6).

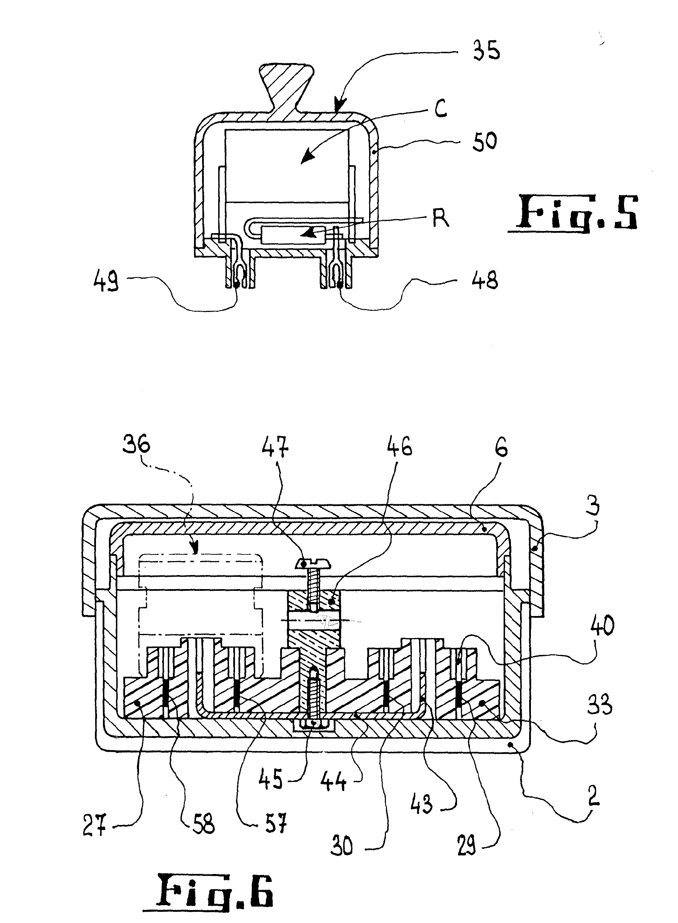

Le module R-C 35 est représenté en détails sur la Figure 5. Il vient s'enficher directement sur les deux lames 29 et 30 au moyen de deux contacts-lyre conjugués 48 et 49. Il comporte, dans son enveloppe en matière plastique 50, un condensateur C et une résistance R qui sont branchés en série comme représenté entre les deux fils de ligne. Ce module R-C permet d'effectuer des tests en fréquence de la ligne à partir de l'autocommutateur du distributeur, et donc à distance.

Comme on le voit sur la Figure 3, les deux paires de lames 29, 30, ou « bus d'interconnexion » ne s'étendent pas seulement le long du compartiment 5, mais se prolongent jusque dans le compartiment 4 qui concerne la connectique propre aux deux abonnés.

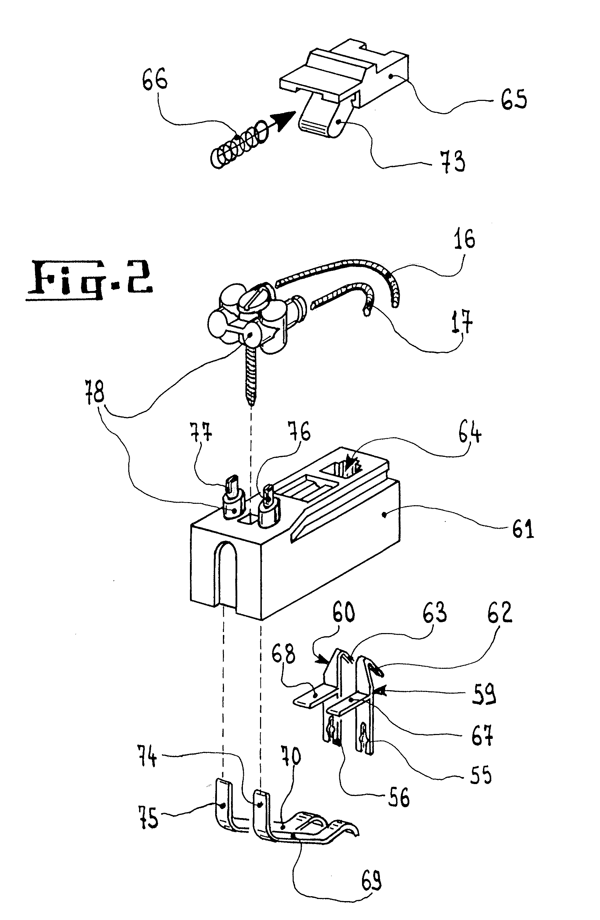

Dans ce compartiment 4, la connexion entre chaque bus 58, 57-29, 30 et les extrémités dénudées des deux fils de ligne correspondants, respectivement 16 et 17 pour une première ligne 20 vers un premier abonné et 18, 19 pour la seconde ligne 21 vers l'autre abonné, s'effectue dans chaque cas au moyen d'un module très particulier 51, 52 (voir Figures 1 à 7) qui vient s'enficher par enclipsage sur une des deux extrémités 53, 54 du socle 27 qui occupent le compartiment 4. Un de ces deux modules est représenté en vue éclatée sur la Figure 2.

Lorsqu'un de ces deux modules, par exemple le module 51, est mis en place sur l'extrémité correspondante 53 du socle 27, et deux contacts-lyre 55, 56 placés sous ce module viennent enfourcher le bus de ligne correspondant, tel que selon le cas le bus 57, 58 ou le bus 29, 30 visibles sur la Figure 6.

Les deux contacts-lyre 55, 56 constituent les extrémités inférieures de deux contacts métalliques plus complexes 59 et 60 (Figures 2 et 3) qui sont prisonniers du corps en matière plastique 61 du module 51.

A leur partie supérieure, ces contacts verticaux sont chacun repliés vers le bas et vers le compartiment 5 pour former deux fines lamelles élastiques 62 et 63 qui constituent les deux classiques contacts de ligne d'une prise femelle 64 de type « modular jack » qui équipe la moitié de la partie supérieure du module 51 qui est la plus proche du compartiment 5.

Cette prise 64 est donc normalement connectée en permanence aux deux bornes 29, 30 ou 57, 58 de la ligne d'arrivée. L'abonné peut y brancher son propre poste téléphonique afin de tester le bon fonctionnement des circuits placés en amont, c'est-à-dire somme-toute le bon fonctionnement des circuits propres au distributeur et placés en amont de son installation privée.

Cette prise 64 est normalement cachée par un couvercle coulissant 65 qui est rappelé en position de fermeture (Figure 3) par un ressort de rappel 66.

Comme on va le voir maintenant, ce couvercle ou volet 65 a un rôle essentiel, car le fait de l'ouvrir en le tirant contre l'action du ressort 66 vient automatiquement déconnecter les circuits de l'abonné.

Les contacts métalliques 59, 60 présentent chacun une patte horizontale 67, 68 qui est dirigée vers l'abonné.

L'extrémité libre de cette patte coopère avec celle conjuguée d'une lame souple 69, 70 pour former un interrupteur tel que l'interrupteur 71 (Figure 3). Comme on le voit bien sur la Figure 3, la partie médiane de chaque lame forme une rampe 72 qui descend en pente douce vers la droite. En position de fermeture du volet 65, une patte 73 solidaire de ce dit volet se rapproche sans s'appuyer sur l'extrémité libre de la rampe 72 permettant ainsi le contact électrique entre les lames 69 et 67 de l'interrupteur 71.

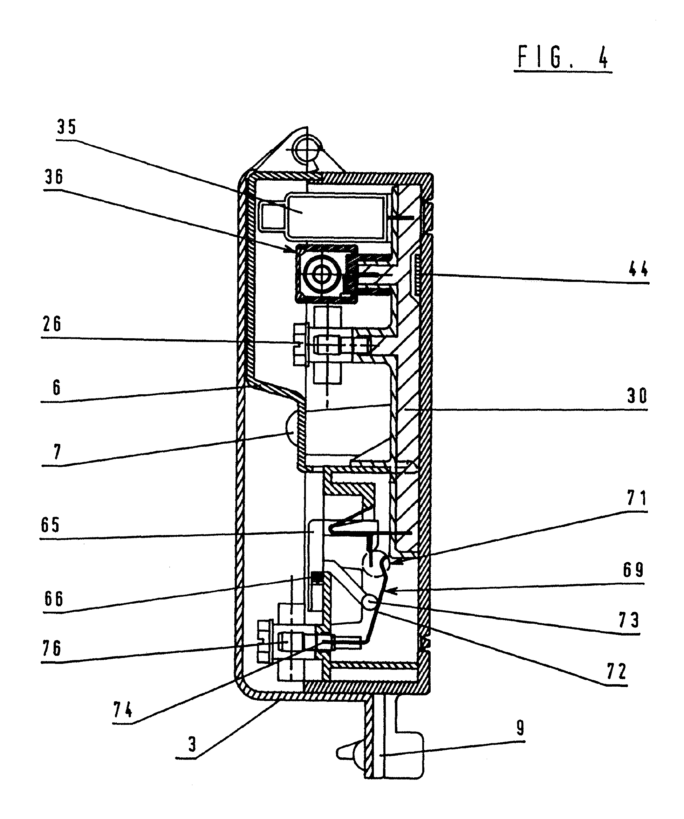

Lorsque, comme montré sur la Figure 4, on ouvre le volet 65 en le reculant contre la force du ressort 66 pour dégager l'entrée de la prise modular-jack 64, l'extrémité libre de la patte 73 vient pousser la lame souple 69 vers le bas, ce qui entraîne l'ouverture de l'interrupteur 71, isolant ainsi cette prise modular-jack de la partie restante de l'installation propre à l'abonné.

A leur extrémité opposée à l'interrupteur 71, chacune des lames 69 et 70 est repliée à la verticale et vers le haut pour former des contacts verticaux 74 et 75.

Sur ces deux contacts sont enfichées les deux fentes autodénudantes inférieures des deux contacts tubulaires 76 et 77 d'un autre module d'interconnexion rapide de lignes téléphoniques 78, 79 qui est identique au module 25 ou 26 précité.

Le module 78 reçoit les fils d'abonné 16 et 17, et le module 79 reçoit les fils d'abonné 18 et 19.

On constate bien finalement que d'une part toutes les interconnexions internes au boîtier sont effectuées sans liaisons filaires et que d'autre part le fait de dégager le volet 65, pour permettre d'accéder à une prise modular-jack 64 afin d'effectuer soi-même un test du bon fonctionnement de la partie plombée 5 propre au distributeur, vient isoler totalement l'installation privée propre à l'abonné de la ligne téléphonique correspondante qui arrive dans ce boîtier. Un tiers malveillant ne peut quoiqu'il en soit se brancher, dans le compartiment 4, sur la ligne de l'abonné sans que celui-ci ne puisse s'en apercevoir.

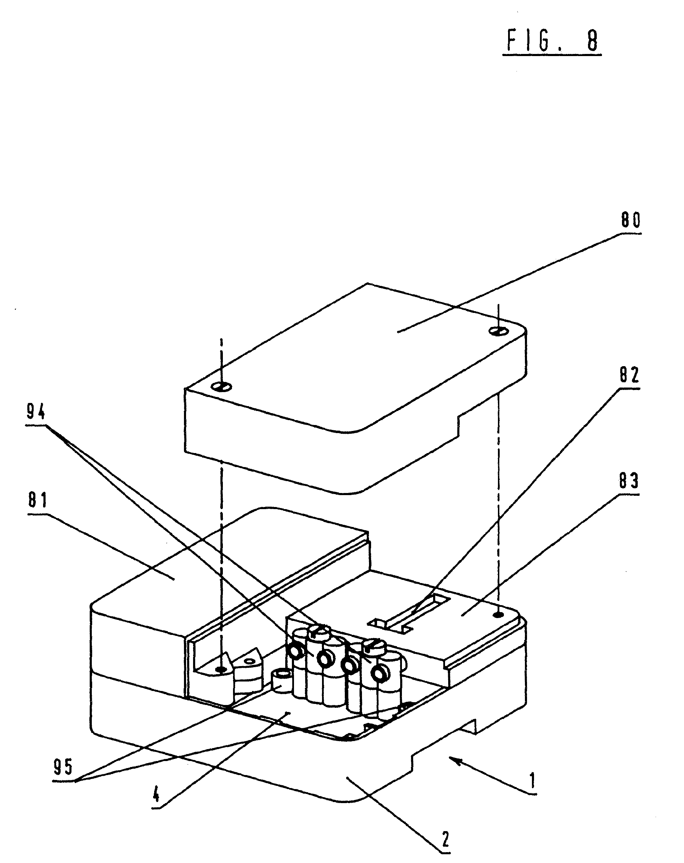

Une autre forme de réalisation de ce boîtier terminal d'interconnexion téléphonique d'abonné sera maintenant décrit en référence aux Figures 8 à 11, à l'ensemble desquelles on se reportera maintenant. Le dispositif représenté est prévu pour raccorder un seul abonné, au lieu de deux comme dans l'exemple précédent, et un conjoncteur français vient y remplacer la prise modular-jack précédente.

Dans cet exemple, le fond 2 du boîtier 1, qui est toujours divisé en ces deux mêmes compartiments distincts 4 et 5, est fermé par deux couvercles adjacents respectifs 80 et 81, le couvercle 81 étant bien entendu plombé car il recouvre le compartiment 5 propre au distributeur.

Toutefois, le compartiment 4 reçoit un conjoncteur français 82, au lieu de la prise « modular jack » 64 précédente, et le couvercle 83 de ce conjoncteur 82 fait partie du couvercle 81 et est donc lui-aussi plombé.

Le compartiment 5 contient, à l'instar du boîtier précédent, un module 84 d'interconnexion rapide de lignes téléphoniques, ainsi qu'une borne de masse 46. Il y est en outre prévu, comme dans le compartiment 4 sur chaque fil de ligne, deux classiques prises de test 86-95 aptes chacune à recevoir une fiche-banane complémentaire.

Un module de protection 87, identique au module 36 précité, peut en outre être enfiché dans ce compartiment 5 sur des contacts-lyre récepteurs 88.

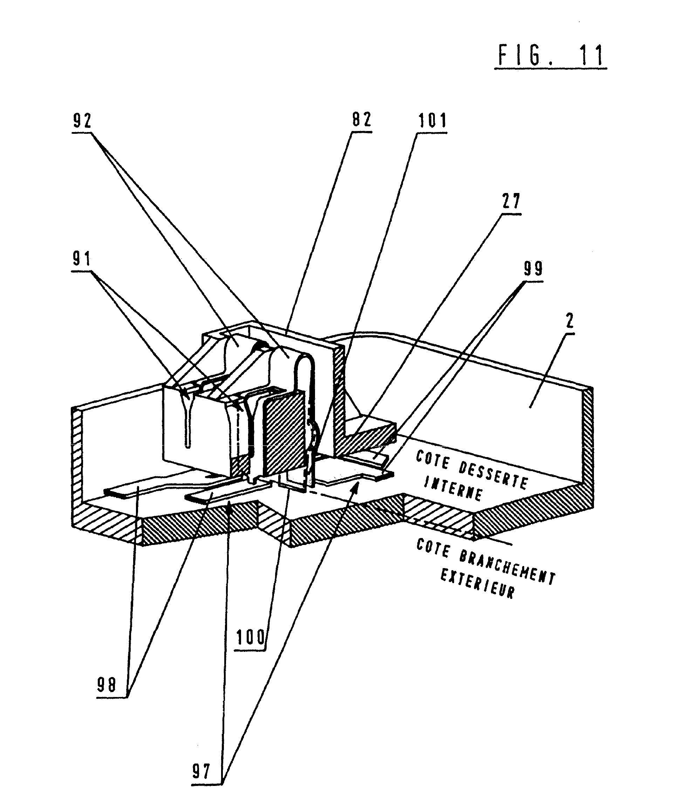

Un classique circuit R-C 89, recouvert normalement par le capot plombé 83, vient s'enficher, par ses deux petites pattes de connexion 90, dans deux fentes de connexion autodénudantes correspondantes 91 (Figure 11) qui font corps avec les deux lames élastiques de connexion de ligne 92 du conjoncteur 82.

Un classique poussoir de connexion 93, permet d'enficher les deux pattes 90 du circuit R-C 89, sans les tordre, dans les fentes 91.

Le compartiment 4, propre à la connectique de l'abonné, contient dans cet exemple deux modules 94 d'interconnexion rapide qui permettent d'avoir par exemple aisément deux postes téléphoniques branchés en parallèle sur la même ligne. On peut très bien ne brancher la ligne de l'abonné que sur un seul de ces modules 94. Ce compartiment contient aussi deux prises de test 95 identiques aux prises 86.

Ce boîtier a les mêmes fonctionnalités que le boîtier précédent. Il effectue d'une part toutes les liaisons sans liaisons filaires internes, et d'autre part l'introduction d'une fiche téléphonique française dans le conjoncteur conjugué 82 vient, comme précédemment, isoler automatiquement l'installation privée de l'abonné par rapport à la ligne téléphonique d'arrivée.

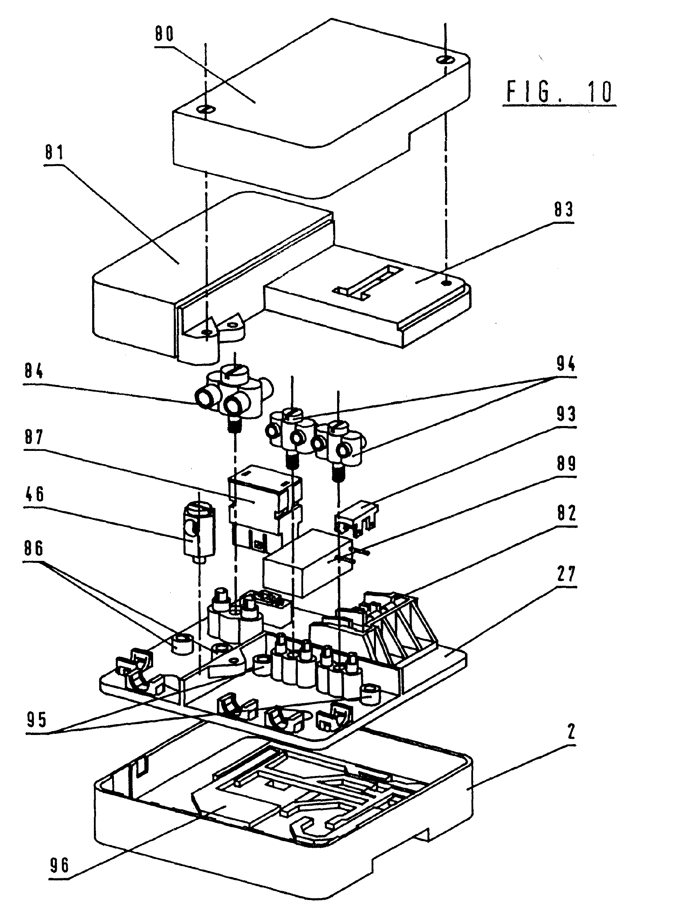

Les moyens utilisés ici pour assurer cette double fonctionnalité seront explicités en référence aux Figures 10 et 11.

Comme auparavant, toute la connectique interne au boîtier est portée par un socle ou platine plastique amovible 27. Les liaisons d'interconnexion sont ici assurées par un classique circuit découpé 97 qui est logé sous la platine 27. En variante, cette platine peut être surmoulée sur ce circuit découpé. Un circuit d'appui 96, en matière plastique, est intégré au fond 2 du boîtier. Il permet de soutenir fermement le circuit découpé 97.

Comme on le voit sur la Figure 11, les deux lames élastiques 92 sont serties chacune sur une connexion plate de ligne respective 98, qui est reliée au côté « distributeur », ou « côté branchement extérieur ». En revanche, les deux connexions plates de ligne 99 du côté « abonné », ou « côté desserte interne », sont connectées respectivement aux extrémités libres 100, internes à la prise 82, des deux lamelles élastiques 92 de ce conjoncteur 82 par un simple contact d'appui élastique 101.

Comme indiqué en traits mixtes sur la Figure 11, l'introduction d'une prise mâle conjuguée dans le conjoncteur 82 fait reculer l'extrémité libre 100, ce qui en coupe le contact avec l'extrémité conjuguée 101 de la ligne, en circuit découpé non-filaire, de desserte interne, ou desserte d'abonné, 99.

A noter bien entendu que le conjoncteur 82 pourrait ici être remplacé par une prise « modular jack » avec volet de fermeture fonctionnant comme précédemment (Figures 3 et 4).

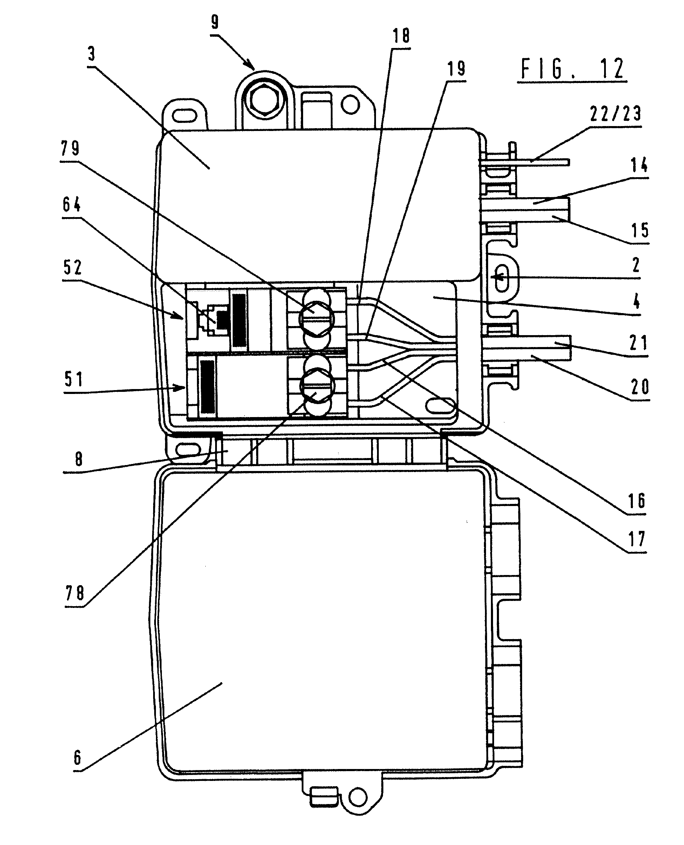

Un autre exemple de réalisation parmi bien d'autres encore, est illustré sur les Figures 12 à 15.

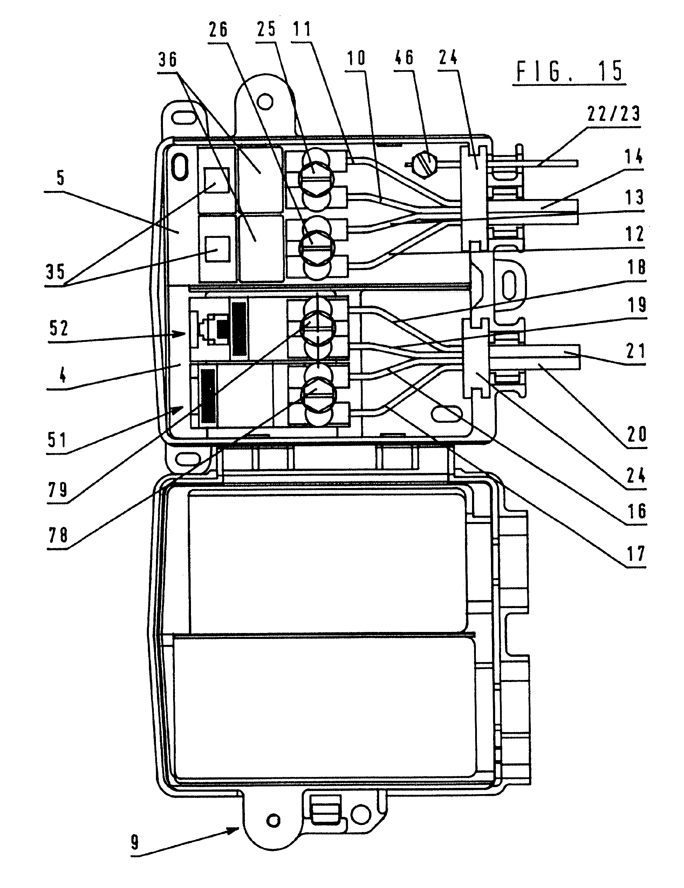

Ce dispositif se différencie de celui selon les Figures 1 à 7 essentiellement par le fait que les compartiments 5 (distribution) et 4 (abonné) sont placés côte à côte, et non pas l'un derrière l'autre. En conséquence, comme on le voit sur la Figure 14, les liaisons d'interconnexion internes au boîtier sont réalisées, à l'instar du dispositif selon la Figure 10, par un circuit découpé 102 plaqué sous le socle 27 et soutenu par un circuit plastique 96.

Pour le reste, ce circuit reprend les éléments précédemment décrits, qui ne seront donc pas décrits à nouveau ici, mais simplement désignés par de mêmes chiffres de référence.

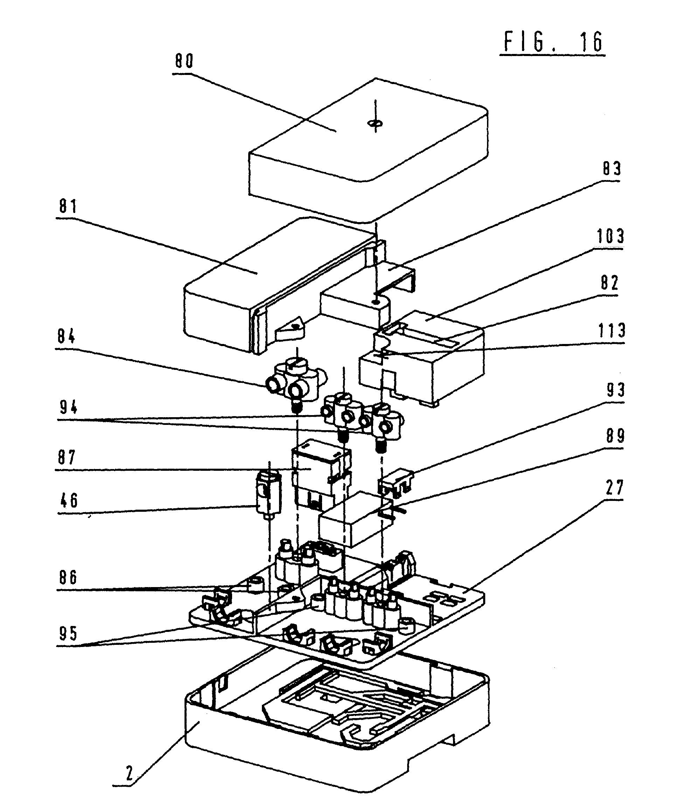

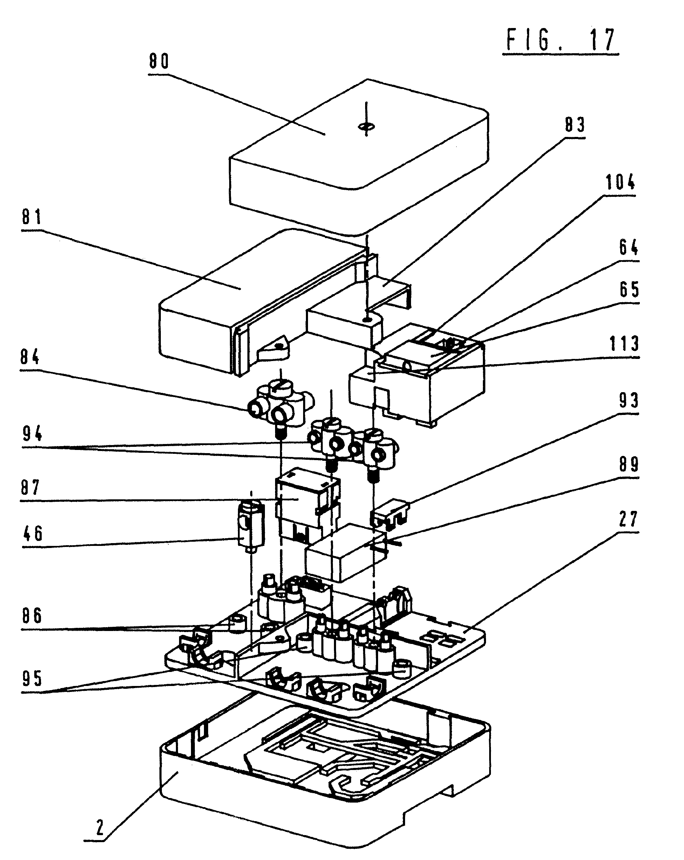

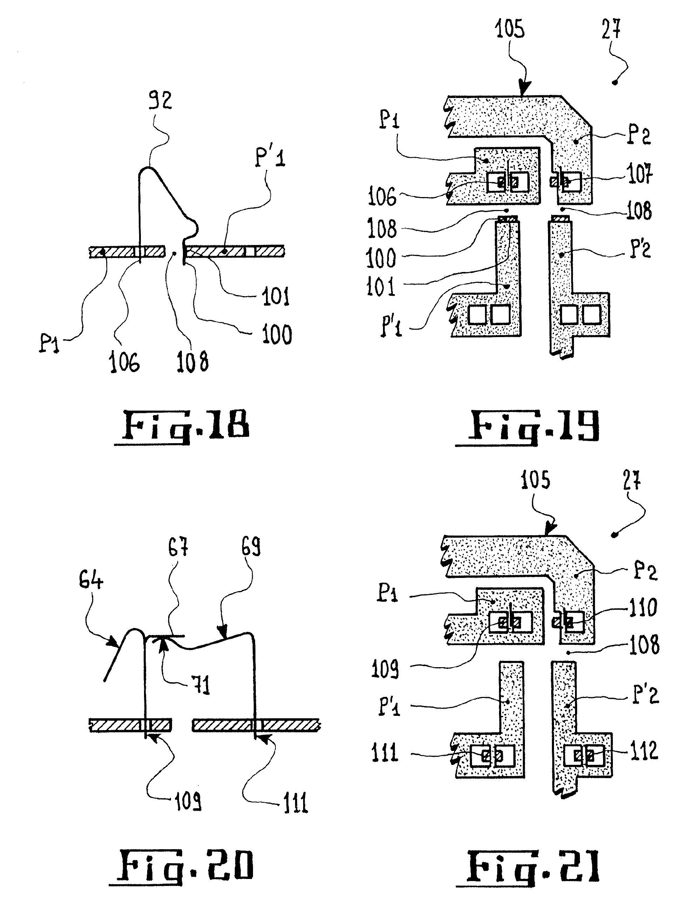

En se référant maintenant aux Figures 16 et 17, et tout d'abord à la Figure 16, cette dernière (qu'il convient de comparer à la Figure 10 dont elle reprend la plupart des éléments, désignés en conséquence par de mêmes chiffres de référence) possède une partie 83 du couvercle plombé 81, qui ne recouvre en fait que le circuit R-C 89, et une partie très localisée 113 du module 103 de la prise 82 réservant au seul distributeur l'opportunité d'extraire cette dernière.

Le conjoncteur lui-même 82, et son circuit électromécanique 100-101 d'isolation électrique automatique de la ligne propre à l'abonné en cas d'enfichage de ladite fiche téléphonique conjuguée, est constitué comme un module 103 qui est enfichable dans la platine 27. et qui englobe les mêmes fonctionnalités que celles de la Figure 11.

L'avantage en est qu'il est alors possible, comme schématisé Figure 17, de remplacer le module enfichable 103 à conjoncteur français 82 par un autre module enfichable 104 qui contient cette fois-ci une prise modular-jack 64 possédant les mêmes fonctionnalités, avec son volet à coupure 65, que celles décrites précédemment en référence aux Figures 3 et 4.

Ces deux modules 103 et 104 s'enfichent par des contacts-lyre sur un seul et même circuit découpé prévu en conséquence sous la platine 27, comme on l'expliquera maintenant en référence aux Figures 18 à 21.

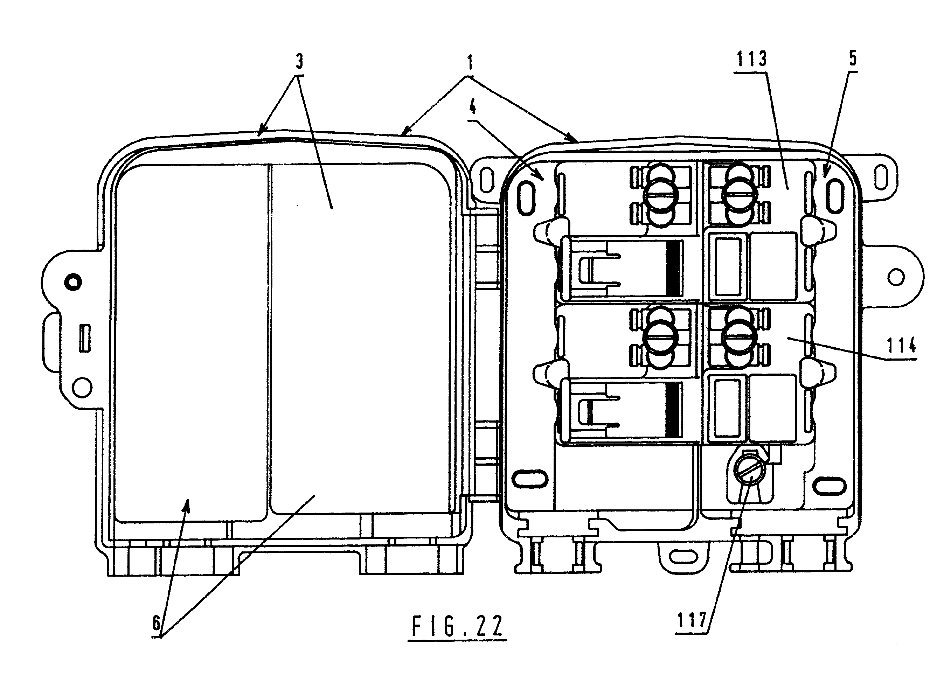

En se référant à ces Figures 18 à 21, on a représenté sur les Figures 19 et 21 une partie 105 du circuit découpé qui est logé sous la platine 27 équipant les boîtiers selon les Figures 16 et 17, et plus précisément la partie de ce circuit découpé qui se trouve, selon le cas, sous la prise modular jack 64 du module enfichable 104 de la Figure 17 ou sous le conjoncteur 82 du module enfichable 103 de la Figure 16.

Comme on le voit sur les Figures 18 et 19, et par comparaison à la Figure 11, les lames élastiques de contact 92 du conjoncteur 82 possèdent chacune un contact-lyre 106, 107, qui sont tous deux prévus pour s'enficher respectivement sur la piste P1 et sur la piste P2, qui matérialisent à elles deux la ligne téléphonique d'arrivée (côté branchement extérieur). Leurs autres extrémités libres 100 viennent alors s'appuyer sur les extrémités 101 des pistes conjuguées P'1 et P'2 qui matérialisent la ligne de départ (côté abonné) et qui sont séparées des premières, P1 et P2, par un intervalle d'air 108.

Comme expliqué précédemment en référence à la Figure 11, l'introduction d'une fiche mâle conjuguée dans le conjoncteur 82 vient ouvrir le contact électrique 100-101 et donc isoler la ligne d'abonné P'1, P'2.

Dans le cas où, selon Figure 17, on remplace le module 103 à conjoncteur par le module 104 à prise modular jack 64, cette prise modular jack 64 est associée (Figure 20) aux mêmes éléments coupe-circuit 67, 69, 71 que celle selon Figure 3. Pour l'enfichage sur les pistes P1, P2 d'une part et P'1, P'2 d'autre part, il est prévu, sur la prise 64 et sur les deux lames 69, en tout deux couples de contacts-lyre 109, 110 et 111, 112 qui s'enfichent respectivement, comme représenté en Figure 21, sur le couple de pistes P1, P2 et P'1, P'2. Le volet 65 selon Figures 17 et 3 vient alors ouvrir l'interrupteur 71 lorsqu'il est reculé pour dégager la prise 64.

On constate fmalement bien qu'un seul et même circuit découpé 105 accueille indifféremment le module enfichable 103 à conjoncteur français et le module enfichable 104 à prise modular jack.

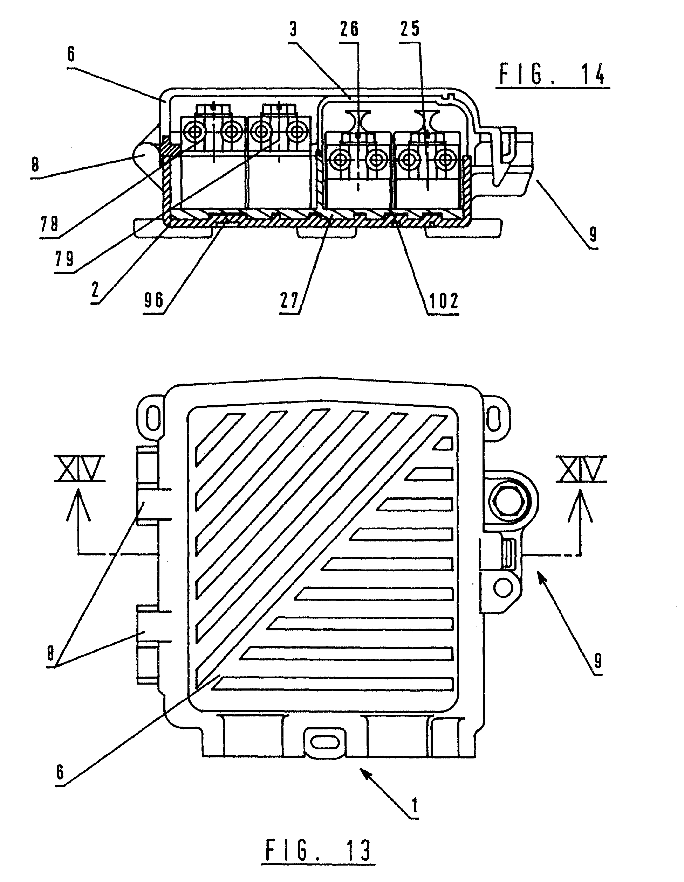

Dans la plupart des réalisations viennent d'être décrites, par exemple dans celle selon la Figure 13, on constate que l'on a affaire à une réalisation qui est figée côté distributeur : le terminal est prévu pour recevoir soit une ou deux lignes (Figure 15), soit uniquement une ligne et pas deux (Figure 17).

Finalement, dans le cas où l'on veut pouvoir brancher soit une, soit deux, lignes d'arrivée côté-distributeur, comme c'est par exemple le cas pour la réalisation selon Figure 15, on constate que le compartiment 5, côté distributeur, est équipé d'éléments qui sont surabondants dans le cas où on ne branche en réalité qu'une seule ligne d'arrivée côté distributeur, qui n'est reliée alors qu'à une seule ligne de départ, côté abonné. En effet, si, dans la réalisation selon Figure 15, on désire seulement ne brancher que la ligne d'arrivée qui correspond aux fils 10 et 11, le client achète néanmoins un terminal d'interconnexion qui est équipé, côté distributeur, de tous les éléments (module 26, prises de branchement des modules associés 35 et 36, circuit découpé réalisant les liaisons électriques) qui sont relatifs au branchement d'une deuxième ligne dont il n'a pas besoin. Généralement néanmoins, il est cependant souhaitable de pouvoir ultérieurement brancher une deuxième ligne sur ce terminal.

Il en résulte une perte économique dommageable, qu'il serait souhaitable d'éviter afm d'accroître la compétitivité de ce terminal d'interconnexion téléphonique.

Un autre petit inconvénient des dispositifs à volet 65 de fermeture de la prise de test « modular jack » côté abonné réside dans le fait que, lorsque l'on a ouvert ce volet pour dégager cette prise, ce qui entraîne ipso-facto la déconnexion de la ligne côté abonné, on est alors obligé de maintenir ce volet ouvert avec le doigt, ce qui mobilise pratiquement une main du manipulateur En effet, ces volets sont équipés d'un ressort 66 de rappel élastique en position de fermeture, mais pas d'un système de blocage en position d'ouverture.

On décrira maintenant, en référence aux Figures 22 à 29, une dernière variante de réalisation qui permet de remédier à ces deux inconvénients des dispositifs précédemment décrits.

La Figure 22 est une vue en plan de cette dernière variante, les deux couvercles de fermeture du boîtier étant ouverts comme c'est le cas pour la réalisation représentée Figure 15 à laquelle il conviendra de comparer cette Figure 22. Ce terminal d' interconnexion est ici équipé, dans le compartiment 5 côté distributeur comme dans le compartiment 4 côté abonné, de tous les éléments et modules relatifs à deux lignes d'arrivée distinctes, connectées par circuits découpés, comme précédemment, à deux lignes de départ respectives vers deux lignes d'abonnés distinctes. On verra par la suite que ce terminal peut aussi être équipé, et c'est son avantage principal, uniquement des éléments et modules relatifs à une seule ligne d'arrivée, connectée à une seule ligne correspondante de départ vers l'abonné.

Sur cette Figure 22, les liaisons filaires 10 à 14, 16 à 21, et 22 ou 23, de la Figure 15, ne sont pas représentées pour ne pas alourdir le dessin.

Jusqu'à présent, tout a été fixé sur l'idée que les deux compartiments 5 et 4 devaient être traités distinctement, justement parce que ce sont deux compartiments. On s'est donc attaché à équiper chacun de ces deux compartiments distinctement en fonction des éléments qu'il doit recevoir, ce qui entraîne le premier désavantage que l'on vient de citer. Dans la réalisation selon Figure 15 par exemple, on aboutit ainsi à une réalisation horizontale figée qui comporte à droite toute la connectique relative au compartiment 5 et à gauche toute celle relative au compartiment 4, ces deux connectiques étant situées de part et d'autre d'une cloison, réelle ou virtuelle, de séparation, et étant totalement conçus comme séparés l'un de l'autre, à part bien entendu les circuits découpés d'interconnexion locale.

La réalisation selon les Figures 22 à 29 fait abstraction du préjugé selon lequel deux compartiments distincts, ici les compartiments 5 et 4, doivent être traités distinctement. Au lieu donc de prévoir deux compartiments 5 et 4 séparés à tous points de vue, on prévoit de constituer ceux-ci au moyen d'au moins deux modules enfichables qui comportent chacun un demi-compartiment 5A relatif à une ligne d'arrivée et un demi-compartiment 4A relatif à une ligne de départ, et qui sont aptes à venir s'enficher, dans un fond de boite récepteur 2 du boîtier 1, fond de boite qui à l'origine est pratiquement vide de connectique en dehors éventuellement des liaisons de masse, l'un contre l'autre pour pouvoir ainsi, si besoin est, recréer les deux compartiments 5 et 4 complets.

Chacun de ces demi-compartiments comporte la connectique complète relative à une ligne d'arrivée et une ligne de départ associée. Si l'on n'est intéressé que par une seule ligne d'arrivée et de départ, il suffit alors d'enficher, dans cette boite réceptrice pratiquement vide, un seul de ces modules. L'autre moitié de la boite reste alors vide, et ne comporte donc pas comme précédemment d'éléments non utilisés.

A contrario, en enfichant l'autre module contre le premier on obtient deux compartiments 4, 5 complets comme c'est le cas pour la Figure 15, avec toute la connectique relative à deux lignes d'arrivée respectivement connectées à deux lignes de départ.

En observant attentivement les Figures 22 à 24, on constate que l'on est somme-toute en présence d'une réalisation horizontale, à contrario de la réalisation selon Figure 15 qui est verticale.

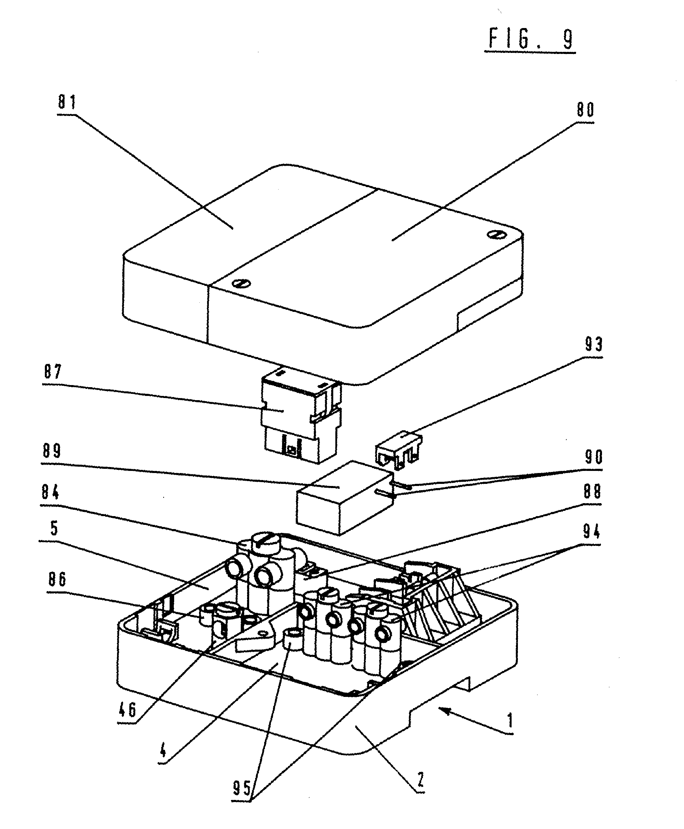

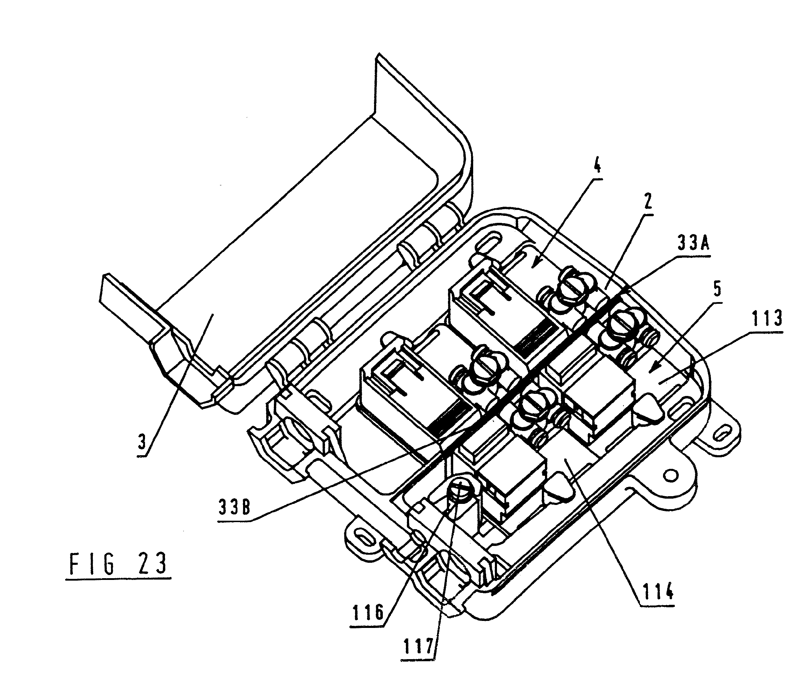

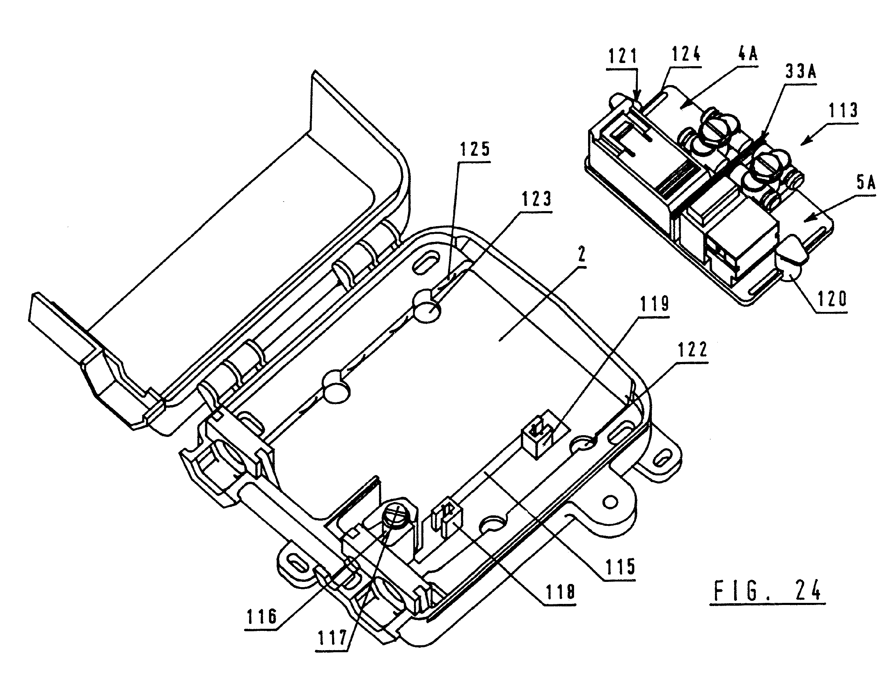

Comme on le voit bien sur la Figure 24, la portion de boite isolante 2 qui forme le fond du boîtier de ce terminal est, avant qu'elle ne reçoive soit un soit deux modules enfichables tels que le module 113 (Figure 24) et/ou le module identique 114 (Figures 22 et 23), pratiquement vide. Elle ne contient en effet, comme élément de connectique, qu'une bande métallique 115 en circuit découpé, qui constitue la liaison de masse, et qui est reliée d'une part une borne 116 apte à recevoir de l'extérieur un fil de masse et connecter ce fil au moyen d'une vis métallique de serrage 117, et d'autre part aux parties médianes, de connexion de masse, 118 et 119 de deux prises femelles tri-broches de connexion par enfichage de deux modules de protection tels que les modules 36, 87, des réalisations précédentes. Une telle prise tri-broches est visible, sous la référence 88, sur la Figure 9, et la même prise est un peu mieux visible sur la Figure 10.

Selon l'invention, ce fond de boite isolant et pratiquement vide 2 est conçu pour recevoir au choix soit un, soit deux modules enfichables 113 et/ou 114. A cet effet, deux pions de centrage 120 et 121 sont prévus sur chaque module enfichable pour coopérer avec deux cavités réceptrices correspondantes, respectivement 122 et 123, de la boite 2. Des lamelles souples 124 sont en outre prévues sur chaque module pour coopérer en encliquetage avec des parties bombées correspondantes 125 du fond de boîtier 2.

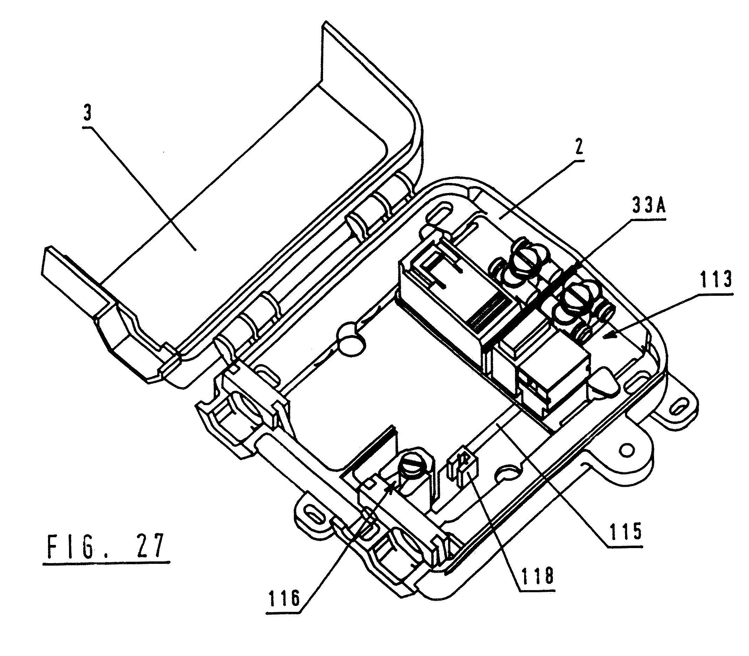

La Figure 27 montre le fond de boîtier 2 après enfichage et mise en place du module 113, tandis que la Figure 23 montre ce même fond de boite 2 après enfichage et mise en place du module 114 également.

A part la connectique de masse 116, 117, 115, 118, 119 précitée, qui fait partie du fond de boite 2, toute la connectique relative à une seule ligne d'arrivée et de départ est contenue dans le module 113 pour une première ligne et dans le module 114 pour une deuxième ligne. Une cloison 33A sépare physiquement, dans le module 113 par exemple, le compartiment, ou plutôt « demi-compartiment », 5A qui contient la connectique d'arrivée qui est celle du distributeur, du compartiment ou « demi-compartiment » 4A qui contient la connectique de départ vers l'abonné.

Le module 114 comporte de même une cloison identique 33B et, après enfichage des deux modules 113 et 114 selon Figure 23, ces deux demi-cloisons 33A et 33B sont alignées pour constituer à elles-deux une cloison complète de séparation, telle que la cloison 33 de la Figure 1, entre les deux compartiments alors complets 4 et 5.

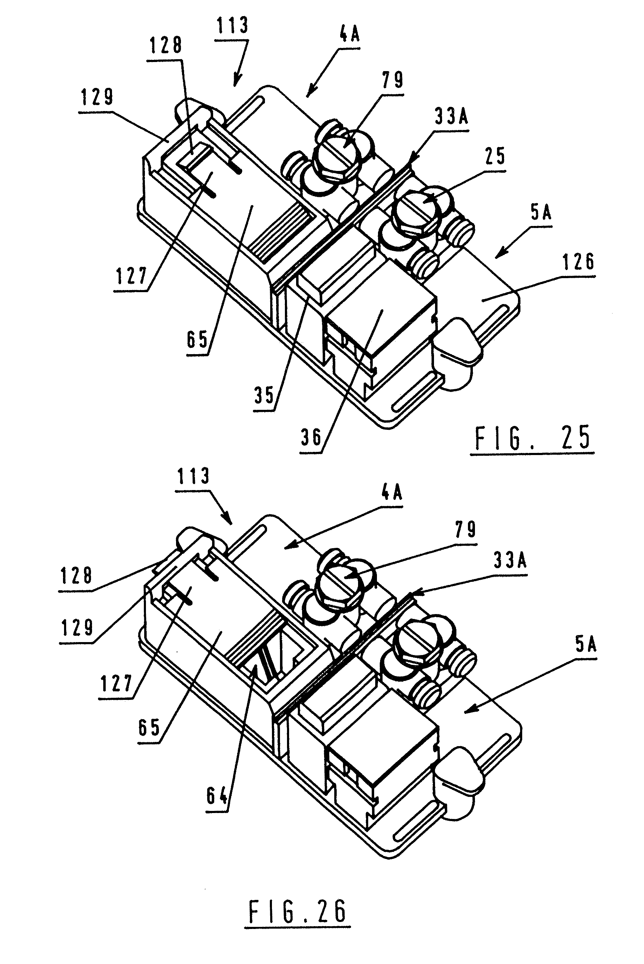

Un des deux modules enfichables, par exemple le module 113, est représenté de manière agrandie sur les Figures 25 et 26, respectivement avec son volet coulissant 65 de fermeture de sa prise de test, ici de type « modular jack », 64 côté abonné d'une part fermé (Figure 25) et d'autre part ouvert (Figure 26). Rappelons à ce sujet que, conformément par exemple à la réalisation selon les Figures 1 à 7, 12, 15, et 17, ce volet 65 est un volet qui est rappelé élastiquement en position de fermeture par un ressort 66, et dont l'ouverture entraîne ipso-facto la déconnexion de la ligne correspondante côté abonné.

Outre la prise de test 64 et son volet de fermeture 65, le compartiment 4A côté abonné comporte un classique module 79 de branchement rapide des deux fils de départ vers l'abonné (à comparer avec la Figure 15).

Le compartiment 5A côté distributeur comporte (à comparer avec la Figure 15), un classique module 25 de connexion rapide des deux fils d'arrivée en provenance du distributeur, ainsi que d'une part la prise de réception d'un module RC éventuel et d'autre part les deux autres fiches femelles qui viennent constituer, avec la fiche femelle de masse précitée 119 qui est déjà en place dans le fond de boite 2 (voir Figure 24), la prise femelle de réception d'un module de protection éventuel 36.

Dans le module 113, toutes les interconnexions sont faites, comme dans la plupart des réalisations précédentes, au moyen d'un circuit découpé, non représenté, qui est incrusté sous la platine 126 du module 113.

Le volet coulissant 65 est muni d'une patte semi-rigide 127, en porte-à-faux et dont l'extrémité libre est équipée d'un crochet d'encliquetage 128.

Lorsque, comme représenté sur la Figure 26, on ouvre totalement le volet 65 pour dégager la prise « modular jack » 64, la patte semi-rigide 127 vient passer sous une traverse correspondante 129 du corps du module 113, de sorte qu'en fin de course d'ouverture de ce volet, le crochet 128 vient s'encliqueter derrière cette traverse 129, maintenant ainsi le volet 65 en position d'ouverture, contre la force de son dispositif 66 de rappel élastique.

Pour refermer le volet 65, il suffit alors de presser le crochet 128 vers le bas, afin de le dégager ainsi de sa traverse de retenue 129 et libérer le ressort de rappel 66 de ce volet.

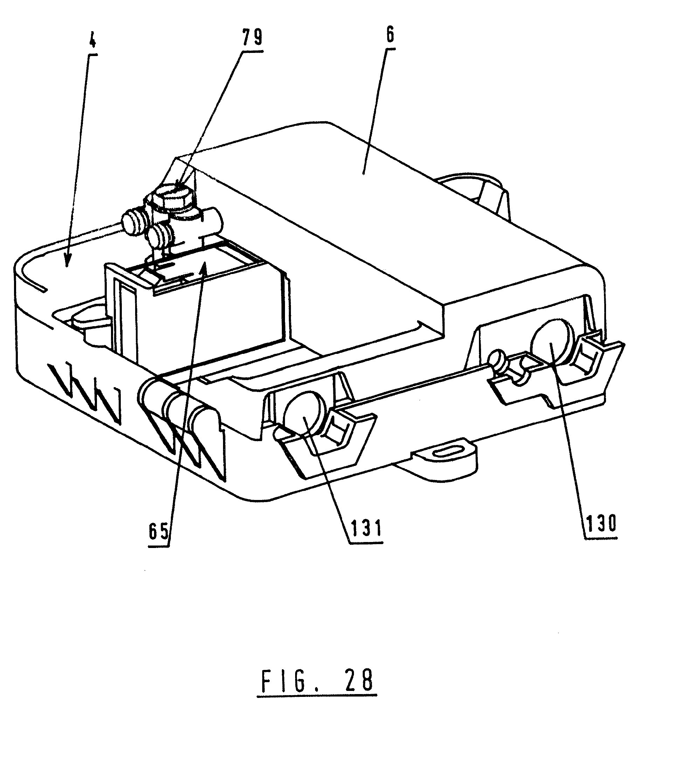

La Figure 28 montre comment, en refermant seulement le demi-couvercle intérieur 6 (comparer avec la Figure 3), seul le compartiment 4 côté abonné reste accessible (le couvercle extérieur 3 n'est pas représenté sur cette Figure 28). Sur cette Figure 28, on distingue nettement les deux passe-cloison 130 et 131 au travers desquels passeront les liaisons filaires, respectivement côté distributeur et côté abonné.

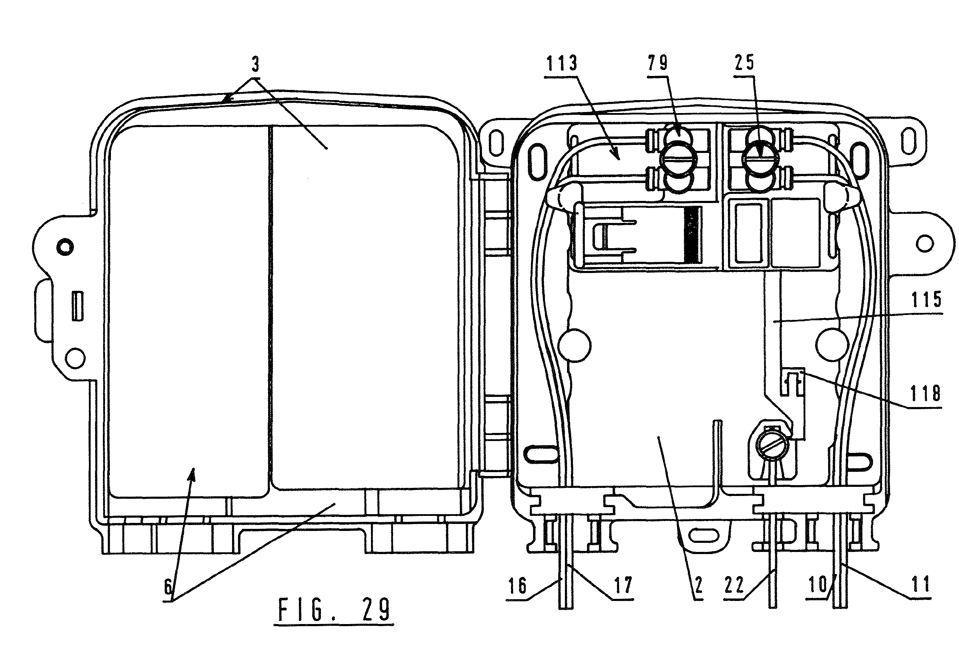

Enfin, la Figure 29 est une vue en plan semblable à la Figure 22, mais avec seulement le module 113 en place dans le fond de boite 2 et les trois liaisons filaires 22 (masse), 10 et 11 (ligne), côté distributeur mises en place et branchées, et les deux liaisons filaires de ligne 16 et 17 côté abonné mises en place et branchées (comparer avec la Figure 15).

Comme il va de soi, l'invention n'est nullement limitée aux exemples de réalisation qui viennent d'être décrits, et bien d'autres formes d'exécutions, comportant les deux mêmes fonctionnalités, de ce dispositif terminal sont envisageables. Le compartiment 5 pourrait par exemple recevoir d'autres modules fonctionnels enfichables que le module de protection 36 et le module R-C 35.

## Revendications

**1.** Dispositif terminal d'interconnexion téléphonique d'une ou plusieurs lignes téléphoniques privées (20, 21) d'au moins un abonné à une ou plusieurs lignes correspondantes (14, 15) d'un distributeur, se présentant sous la forme d'un boîtier (1) divisé en deux compartiments, un premier compartiment (5) généralement non accessible à l'abonné et contenant la connectique du distributeur, et un second compartiment (4) accessible à l'abonné et contenant la connectique de l'abonné, et comprenant, pour chaque ligne (14, 20 ; 15, 21), une prise de test branchée directement sur la ligne du distributeur (14, 15) et servant à tester le bon fonctionnement de la ou des lignes du distributeur, **caractérisé en ce que** les interconnexions électriques entre le premier compartiment (5) et le second compartiment (4) sont réalisées par des moyens de liaison non-filaires (29, 30, 97, 102).

**2.** Dispositif selon la revendication 1, **caractérisé en ce que** ladite prise de test est une prise téléphonique (64, 82) associée à des moyens électromécaniques (65, 100-101) qui entraînent la coupure automatique de la liaison électrique existant entre la prise (64, 82) et la ligne téléphonique privée (20, 99) de l'abonné, lorsqu'une fiche téléphonique conjuguée est branchée dans cette prise (64, 82).

**3.** Dispositif selon la revendication 2, **caractérisé en ce que** la connectique (79, 69, 59), comprenant les moyens électromécaniques (64, 65) de chaque ligne de l'abonné (20, 21) et comprise dans le second compartiment (4), est réalisée sous forme d'un module enfichable (52, 103, 104).

**4.** Dispositif selon la revendication 2 ou 3, **caractérisé en ce qu'**il comporte, pour chacune desdites prises téléphoniques de test (64), un volet (65) de fermeture de ladite prise (64), et **en ce que** ce volet (65) est associé à des moyens électromécaniques (66, 73, 72, 71) qui, lorsqu'on ouvre ce volet (65) pour dégager la prise (64) qu'il recouvre, entraînent automatiquement par effet d'interrupteur électrique (71) la déconnexion électrique des circuits de ligne (74, 21) placés en aval de cette prise de test (64), c'est à dire des circuits de ligne privée de l'abonné.

**4.** Dispositif selon l'une quelconque des revendications précédentes, **caractérisé en ce que** les lamelles (92) de connexion qui font partie de ladite prise (82) sont des lamelles élastiques dont l'extrémité libre (100) interne à cette prise (82) vient en appui sur une extrémité conjuguée (101) du circuit non-filaire (99) de desserte d'abonné, de sorte que l'introduction, dans cette prise (82), de ladite fiche téléphonique conjuguée vient repousser lesdites lamelles élastiques en entraînant alors, par effet d'interrupteur électrique (100, 101), la déconnexion électrique des circuits de ligne (99) placés en aval de cette prise de test (82), c'est-à-dire des circuits de ligne privée de l'abonné.

**5.** Dispositif selon l'une des revendications précédentes, **caractérisé en ce que** les connexions, dans ledit boîtier (1), des extrémités des fils de lignes (14, 15, 20, 21) d'arrivée (10-11, 12-13) et de départ (16-17, 18-19) sont réalisées par des modules (25, 78, 26, 79) d'interconnexion rapide de lignes téléphoniques à fentes autodénudantes et vis de commande.

**6.** Dispositif selon la revendication 5, **caractérisé en ce que**, lesdits modules (25, 78) étant du type comportant chacun deux contacts métalliques (28, 76) à fentes autodénudantes supérieures et inférieures, ces modules (25, 78) comportent une partie inférieure fendue enfichée sur la tranche d'une lame métallique (30, 74) qui fait partie desdites interconnexions électriques contenues dans ledit boîtier (1), dans un but de raccordement d'une seconde paire de fils par la partie inférieure fendue de chacun de ses deux contacts (28, 76).

**7.** Dispositif selon l'une quelconque des revendications précédentes, **caractérisé en ce que** ledit premier compartiment (5) est apte à recevoir, par enfichage sur lesdites liaisons non-filaires (29, 30) des modules fonctionnels auxiliaires, tels qu'un module de protection (36) à parasurtension (34) et/ou un module R-C (35).

**8.** Dispositif selon l'une quelconque des revendications précédentes, **caractérisé en ce qu'**il est agencé pour recevoir, dans ledit second compartiment (4), un module enfichable (103) muni d'un conjoncteur téléphonique (82) comme prise de test, ou un module enfichable (104) muni d'une prise modular-jack (64) comme prise de test, chacun de ces modules enfichables (103, 104) contenant lesdits moyens électromécaniques (71, 100-101) d'isolation électrique automatique de la ligne de l'abonné en cas d'enfichage de ladite fiche téléphonique conjuguée.

**9.** Dispositif selon la revendication 8, **caractérisé en ce qu'**il est agencé (106-107, 109-112) de façon à n'utiliser qu'un seul et même circuit découpé (105) pour recevoir l'un ou l'autre de ces deux modules enfichables (103, 104).

**10.** Dispositif selon la revendication 1, **caractérisé en ce que** le fond de boite (2) de boîtier (1) est apte à recevoir au choix soit un, soit au moins deux modules enfichables (113, 114) qui comportent chacun un demi-compartiment (5A) muni de la connectique relative à une ligne d'arrivée et un demi-compartiment (4A) muni de la connectique relative à une ligne de départ, ces modules (113, 114) étant aptes à venir s'enficher dans ledit fond de boite récepteur (2) qui est, à l'état nu, vide de connectique, ne contenant que des liaisons de masse (116, 117, 115, 118, 119), ces modules (113, 114) s'enfichant l'un contre l'autre pour ainsi pouvoir recréer, dans le cas où ils sont tous enfichés dans ce fond de boite (2), les deux compartiments complets (4, 5) relatifs au branchement d'un nombre de lignes, qui comportent chacune une ligne d'arrivée et une ligne de départ, qui est égal au nombre de modules enfichés.

**11.** Dispositif selon la revendication 1, **caractérisé en ce qu'**il comporte, pour chacune des prises téléphoniques de test (64), un volet (65) de fermeture de ladite prise (64), ce volet (65) étant associé à des moyens électromécaniques qui, lorsqu'on ouvre ce volet (65) pour dégager la prise (64) qu'il recouvre, entraînent automatiquement, par effet d'interrupteur électrique, la déconnexion électrique des circuits de ligne (16, 17) placés en aval de cette prise de test (64), c'est-à-dire des circuits de ligne privée de l'abonné, ledit volet (65) comportant des moyens (127, 128 ) aptes à le retenir en position d'ouverture même s'il est muni d'un dispositif (66) de rappel en position de fermeture, ces moyens coopérant avec un organe fixe (129) du terminal.

**12.** Dispositif selon la revendication 11, **caractérisé en ce que** ces moyens de retenue sont constitués par une patte semi-rigide (127) du volet (65), dont l'extrémité en porte-à-faux comporte un crochet d'encliquetage (128) apte à coopérer avec un organe conjugué (129) du terminal.
